(19) Europäisches Patentamt
European Patent Office
Office européen des brevets

(11) EP 1 000 961 A1

(12) **EUROPEAN PATENT APPLICATION**
published in accordance with Art. 158(3) EPC

(43) Date of publication:
**17.05.2000 Bulletin 2000/20**

(21) Application number: **98933951.0**

(22) Date of filing: **28.07.1998**

(51) Int. Cl.7: **C08J 3/14**, C08J 3/16, C08L 27/18

(86) International application number:
**PCT/JP98/03344**

(87) International publication number:
**WO 99/06475 (11.02.1999 Gazette 1999/06)**

(84) Designated Contracting States:
**DE FR GB IT NL**

(30) Priority: **01.08.1997 JP 20789097**

(71) Applicant:
**Daikin Industries, Ltd.**
**Osaka-shi Osaka 530-8323 (JP)**

(72) Inventors:
- **ASANO, Michio,**
**Yodogawa-seisakusho Daikin Ind. Ltd**
**Settsu-shi, Osaka 566-8585 (JP)**
- **SUKEGAWA, Masamichi,**
**Yodogawa-seisakusho**
**Settsu-shi, Osaka 566-8585 (JP)**
- **TSUJI, Masayuki,**
**Yodogawa-seisakusho**
**Settsu-shi, Osaka 566-8585 (JP)**

(74) Representative: **HOFFMANN - EITLE**
**Patent- und Rechtsanwälte**
**Arabellastrasse 4**
**81925 München (DE)**

(54) **PROCESS FOR PRODUCING GRANULAR POLYTETRAFLUOROETHYLENE POWDER**

(57) The process for preparing a granular polytetrafluoroethylene powder by using a non-flammable bromine-containing organic solvent having a boiling point of 0 to 150°C, particularly 1-bromopropane as an organic liquid. According to the preparation process, it is possible to exhibit granulation performance equal to a flon type organic solvent which gives particularly excellent performance, to provide a granular PTFE powder being excellent in powder characteristics safely at low cost, and to contribute to lowering of depletion of the ozone layer and prevention of global warming.

FIG. 1

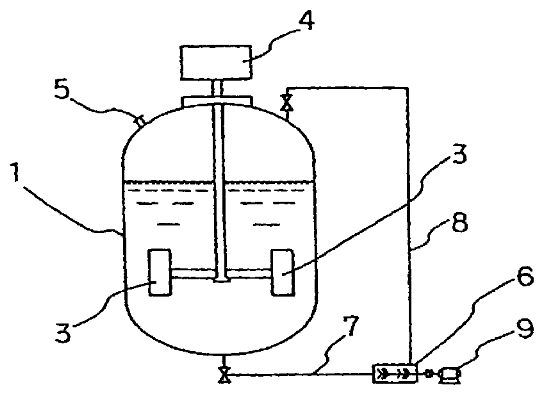


EP 1 000 961 A1

## Description

TECHNICAL FIELD

The present invention relates to a preparation process of a granular polytetrafluoroethylene (PTFE) powder.

BACKGROUND ART

A PTFE powder prepared by suspension polymerization method has a large particle size of not less than 500 μm, and therefore is once pulverized into a PTFE powder having an average particle size of less than 100 μm and then granulated into a granular powder having an average particle size of 150 to 500 μm to enhance powder characteristics thereof.

Such a preparation process of granular powder (granulation method) has been known and is roughly classified into a process using water only, a process using water and an organic liquid and a process using an organic liquid only.

Further as the preparation process in combination use of water and an organic liquid, there are the following processes.

(1) A process for granulating a PTFE powder in water in the presence of an organic liquid with stirring (hereinafter referred to as "granulation method in the state of aqueous dispersion". JP-B-44-22619, JP-B-3-39105, JP-B-48-37576, JP-B-49-17855, JP-B-60-21694)

(2) A process for granulating a PTFE powder in water in the presence of an organic liquid and a surfactant with stirring (hereinafter referred to as "granulation method in the state of emulsion". WO97/11111 publication)

(3) A process for preparing a granular PTFE powder by granulation, in water with stirring, of a PTFE powder and filler, in which after the powder and filler are poured in water separately without being pre-mixed and are stirred and mixed in the presence of a surfactant to give a slurry or after only the PTFE powder is formed into the state of slurry and the filler is added thereto, granulation is carried out with stirring further in the presence of an organic liquid (hereinafter referred to as "granulation method in the state of slurry". WO97/15611 publication).

Also as a process using only an organic liquid, there is a process for granulating by wetting the PTFE powder and filler with an organic liquid in the absence of water and applying a mechanical force, for example, by tumbling, etc. (hereinafter referred to as "granulation method by tumbling". JP-B-44-22620, JP-B-45-9071).

It is assumed that an organic liquid used for those processes may be one which wets a surface of PTFE powder. In case where an organic liquid is used in combination with water, there is known an organic liquid which has a surface tension of not more than 36 dyn/cm and can form a liquid-liquid interface with water.

Hitherto so-called flon type organic liquids such as perfluorocarbon and chlorofluorocarbon have been used as particularly useful organic solvents. However use of them was prohibited from the viewpoint of environmental safety, i.e., prevention of depletion of the ozone layer.

Accordingly development of solvents replacing flon has been made positively for use thereof in granulation of a PTFE powder, and HCFC type solvents such as 1,1-dichloro-2,2,2-trifluoroethane, 1,1-dichloro-1-fluoroethane, 1,1-dichloro-2,2,3,3,3-pentafluoropropane and 1,3-dichloro-1,1,2,2,3-pentafluoropropane; and chlorinated hydrocarbon type solvents such as dichloromethane, trichloroethane and perchloroethylene have been proposed.

However since any of those solvents have a Global Warming Potential (GWP, a value integrated by 100 years) of as high as not less than 100, restriction on exhausting amount thereof was determined and it is now difficult to put them into practical use.

The present invention was made in view of the above-mentioned problem.

DISCLOSURE OF THE INVENTION

The present invention is characterized in that in the above-mentioned processes for preparing a granular PTFE powder, a non-flammable organic liquid, which greatly reduces or nearly completely prevents depletion of the ozone layer and global warming is used.

Particularly the present invention is characterized by using a non-flammable bromine-containing organic solvent having a boiling point of 0° to 150°C in preparing a granular PTFE powder.

The bromine-containing organic solvent to be used in the present invention may comprise a single component or a mixture of two or more solvents. It is preferable that a boiling point of the whole components of the bromine-containing organic solvent is from 0° to 150°C, particularly from 20° to 100°C, further from 40° to 80°C.

BRIEF DESCRIPTION OF THE DRAWINGS

Fig. 1 is a diagrammatic cross-sectional view of a granulator which can be used in Embodiments 1 to 3 of the present invention.
Fig. 2 is a diagrammatic cross-sectional view of another granulator which can be used in Embodiments 1 to 3 of the present invention.
Fig. 3 is a diagrammatic cross-sectional view of a granulator with a rotating disc which is used in Embodiment 4 of the present invention.
Fig. 4 is a diagrammatic cross-sectional view of a granulator with a rotating disc which is used in Embodiment 4 of the present invention.
Fig. 5 is a diagrammatic view of an apparatus used for determining flowability of a granular PTFE powder in the present invention.

BEST MODE FOR CARRYING OUT THE INVENTION

Examples of the non-flammable bromine-containing organic solvent which has a boiling point of 0° to 150°C and is used in the present invention are 1-bromopropane (boiling point: 71°C), 2-bromopropane (boiling point: 59° to 60°C), 1,2-dibromopropane (boiling point: 140° to 142°C), 1-bromo-2-fluoroethane (boiling point: 71° to 72°C), 1-bromo-3-fluoropropane (boiling point: 99° to 101°C), 1,2-dibromofluoroethane (boiling point: 122.5°C), 1,2-dibromo-1,1-difluoroethane (boiling point: 92° to 93°C), dibromomethane (boiling point: 97°C), and the like. Among them, 1-bromopropane is preferred from the viewpoint of safety to human body. 1-Bromopropane does not have adverse effect on human body, and besides is excellent in a property necessary for granulating a PTFE powder, that is, a property for wetting PTFE. Also 1-bromopropane is excellent in an ability of forming a liquid-liquid interface with water (surface tension: 26 dyn/cm) which is required for use in combination with water and also its industrial availability is good.
Further those bromine-containing organic solvents may be used in combination with other organic liquid as far as boiling points thereof do not exceed the above-mentioned ranges and requirement for non-flammability is satisfied.
It is preferable that an organic liquid existing in a preparation system has an Ozone Depletion Potential (ODP) of not more than 0.03 and a Global Warming Potential (GWP, a value integrated by 100 years) of not more than 10.
1-Bromopropane has an Ozone Depletion Potential (ODP) of 0.021 and a Global Warming Potential (GWP, a value integrated by 100 years) of about 0.3 which are within the above-mentioned range and satisfy those requirements.
Mentioned below are explanations on embodiments in case of using 1-bromopropane.

(1) Embodiment 1 (granulation method in the state of aqueous dispersion)

Embodiment 1 of the present invention relates to the process for preparing the granular PTFE powder by granulating a PTFE powder in water with stirring, which is characterized in that the granulation is carried out with stirring in the presence of 1-bromopropane.
The preparation process of Embodiment 1 is applicable to the cases of granulating only a PTFE powder and granulating a PTFE powder and filler together.
The granulation method in the state of aqueous dispersion of the present invention using 1-bromopropane as an organic liquid can be carried out by known procedures.
For example, a PTFE powder and if necessary, a filler are mixed uniformly, and the powder is stirred and mixed in a 2-phase liquid medium of water and 1-bromopropane. A temperature of the medium is usually from about 10°C to about 80°C, preferably from 55° to 75°C. Though powder characteristics of the obtained granular PTFE powder is affected by stirring conditions, known stirring conditions are employed in the present invention. The conventional aqueous (wet type) granulation methods of PTFE are described, for example, in JP-B-47-1549, JP-A-47-34938 and the above-mentioned patent publications.
The PTFE powder used in Embodiment 1 is obtained by usual suspension polymerization. Preferred is, for example, a PTFE powder obtained by pulverizing a powder comprising, for example, tetrafluoroethylene (TFE) homopolymer, a copolymer (modified PTFE) of TFE and a monomer copolymerizable with TFE, or the like. An average particle size of a powder after the pulverization is not more than 200 µm, preferably not more than 100 µm, particularly preferably not more than 50 µm. A lower limit of the average particle size is defined by a pulverizing apparatus and pulverizing technique.

As the monomer copolymerizable with TFE, there are, for example, a perfluoro(vinyl ether) represented by the formula (I):

$$CF_2=CF\text{-}OR_f \qquad (I)$$

wherein $R_f$ is a perfluoroalkyl group having 1 to 10 carbon atoms, a perfluoro(alkoxyalkyl) group having 4 to 9 carbon atoms, an organic group represented by the formula (II):

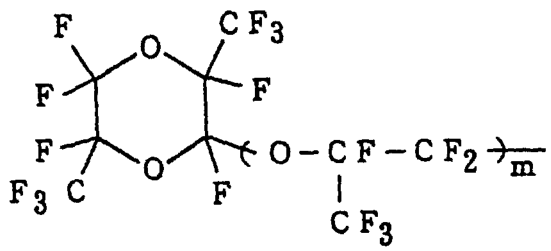

(II)

in which m is 0 or an integer of 1 to 4, or an organic group represented by the formula (III):

$$CF_3CF_2CF_2\text{—}(O\text{-}\underset{|}{C}F(CF_3)\text{-}CF_2)_n\text{—} \qquad (III)$$

in which n is an integer of 1 to 4, and the like.

The number of carbon atoms of the perfluoroalkyl group is from 1 to 10, preferably from 1 to 5. When the number of carbon atoms is within the above-mentioned range, an effect of giving excellent creep resistance, flex fatigue resistance in bending and thermo-processability can be obtained with maintaining the property of being non-melt-processable.

As the above-mentioned perfluoroalkyl group, there are, for example, perfluoromethyl, perfluoroethyl, perfluoropropyl, perfluorobutyl, perfluoropentyl, perfluorohexyl and the like. From the viewpoint of creep resistance and cost of monomer, perfluoropropyl is preferable.

When a proportion of the monomer copolymerizable with TFE is within the range of 1.0 to 0.001 % by mole, an effect of making creep resistance excellent can be obtained with maintaining the property of being non-melt-processable. Particularly preferable is a modified PTFE prepared by copolymerizing 99 to 99.999 % by mole of TFE with 1 to 0.001 % by mole of perfluoro(vinyl ether).

In Embodiment 1, there are used particles prepared by pulverizing the above-mentioned PTFE powder to an average particle size of not more than 200 μm, preferably not more than 100 μm, particularly not more than 50 μm, for example, in the presence of water or under dry condition with a pulverizing machine such as a hammer mill, crusher equipped with a rotor having blades, jet mill and impact mill.

The use of the above-mentioned PTFE powder particles having the average particle size in the above-mentioned range can provide such effects that the granular powder obtained through granulation is easily handled, that is, having good powder flowability and an excellent apparent density, and in addition, the obtained molded articles have good physical properties.

In embodiment 1, the above-mentioned PTFE powder may be granulated solely, and a filler-containing granular PTFE powder can be prepared by granulating the powder together with a filler.

In case where a hydrophilic filler is used, there is a drawback such that the filler is easily transferred into a liquid phase due to its hydrophilic property and is difficult to be mixed with the PTFE powder homogeneously, that is, the agglomerated powder in which the whole of the filler used is mixed with the PTFE powder cannot be obtained and a part of the filler remains in the treating water. This phenomenon is called the separation of filler.

To cope with that problem, there is employed a method of previously surface-treating a hydrophilic filler for making it hydrophobic to lower its surface activity near the surface activity of the PTFE powder particles and then stirring in water, a method of adding a compound having such a function to an aqueous medium and then stirring, or the

like method.

As the compound known as one used for the above-mentioned surface treatment, there are (a) a functional amino-containing silane, a phenyl-containing silane, and (or) a soluble silicone (JP-A-51-548, JP-A-51-549, JP-A-4-218534), (b) a monocarboxylic acid of hydrocarbon having 12 to 20 carbon atoms (JP-B-48-37576), (c) a chromium complex compound of an aliphatic carboxylic acid (JP-B-48-37576), (d) a silicone (JP-A-53-139660), etc. and (e) a method of coating a hydrophilic filler with PTFE (JP-A-51-121417) is also known.

Examples of the above-mentioned compound used for the surface treatment of the hydrophilic filler are, for instance, aminosilane coupling agents such as γ-aminopropyltriethoxysilane ($H_2N(CH_2)_3Si(OC_2H_5)_3$), m- or p-aminophenyltriethoxysilane ($H_2N\text{-}C_6H_4\text{-}Si(OC_2H_5)_3$), γ-ureidopropyltriethoxysilane ($H_2NCONH(CH_2)_3Si(OC_2H_5)_3$, N-(β-aminoethyl)-γ-aminopropyltrimethoxysilane ($H_2N(CH_2)_2NH(CH_2)_3Si(OCH_3)_3$) and N-(β-aminoethyl)-γ-aminopropylmethyldimethoxysilane ($H_2N(CH_2)_2NH(CH_2)_3SiCH_3(OCH_3)_2$), and the like. In addition to those compounds, there are, for example, organosilane compounds such as phenyltrimethoxysilane, phenyltriethoxysilane, p-chlorophenyltrimethoxysilane, p-bromomethylphenyltrimethoxysilane, diphenyldimethoxysilane, diphenyldiethoxysilane and diphenylsilanediol.

A filler having water-repelling property can be used as it is.

Examples of the filler are, for instance, one or more of metal fibers or metal powders such as glass fiber, graphite powder, bronze powder, gold powder, silver powder, copper powder, stainless steel powder, stainless steel fiber, nickel powder and nickel fiber; inorganic fibers or inorganic powders such as molybdenum disulfide powder, fluorinated mica powder, coke powder, carbon fiber, boron nitride powder and carbon black; organic powders such as heat-resistive aromatic resin powder, e.g. polyoxybenzoyl polyester, polyimide powder, tetrafluoroethylene-perfluoro(alkyl vinyl ether) copolymer (PFA) powder and polyphenylene sulfide powder; and the like. The filler is not limited thereto.

In case where two or more fillers are used, preferable combination is, for example, glass fiber and graphite powder, glass fiber and molybdenum disulfide powder, bronze powder and molybdenum disulfide powder, bronze powder and carbon fiber, graphite powder and coke powder, graphite powder and heat-resistive aromatic resin powder, carbon fiber and heat-resistive aromatic resin powder, or the like. The mixing method may be either of wet method or dry method.

It is preferable that an average particle size of the filler is from 10 to 1,000 μm in case of a powder and an average fiber length is from 10 to 1,000 μm in case of a fiber.

In order to obtain a mixture of the PTFE powder and filler, for example, a PTFE powder of not more than 200 μm and a filler may be mixed uniformly with a pulverizing mixer, flush mixer, blender or kneader. With respect to the proportion of the PTFE powder and the filler, it is preferable that the proportion of the filler is 2.5 to 100 parts by weight (hereinafter referred to as "part") on the basis of 100 parts of the PTFE powder.

The organic liquid which is used in the present invention is 1-bromopropane. If desired, 1-bromopropane may be used in combination with other organic liquid capable of forming a liquid-liquid interface with water and being present as droplets in water. Examples of the other organic liquid are, for instance, alcohols such as 1-butanol and 1-pentanol; ethers such as diethyl ether and dipropyl ether; ketones such as methyl ethyl ketone and 2-pentanone; aliphatic hydrocarbons such as pentane and dodecane; aromatic hydrocarbons such as benzene, toluene and xylene; halogenated hydrocarbons other than 1-bromopropane such as methylene chloride, tetrachloroethylene, trichloroethylene, chloroform, chlorobenzene, trichlorotrifluoroethane, monofluorotrichloromethane, difluorotetrachloroethane, 1,1,1-trichloroethane, 1,1-dichloro-2,2,3,3,3-pentafluoropropane, 1,3-dichloro-1,1,2,2,3-pentafluoropropane, 1,1-dichloro-2,2,2-trifluoroethane and 1,1-dichloro-1-fluoroethane; and the like. Among them, the halogenated hydrocarbons other than 1-bromopropane are preferable, and particularly preferable are chlorinated- and fluorochlorinated-hydrocarbons such as 1,1,1-trichloroethane, 1,1-dichloro-2,2,3,3,3-pentafluoropropane, 1,3-dichloro-1,1,2,2,3-pentafluoropropane, 1,1-dichloro-2,2,2-trifluoroethane and 1,1-dichloro-1-fluoroethane. Those are nonflammable and satisfy requirements for flon restrictions. Those other organic liquids may be used solely or in combination use of two or more thereof. The other organic liquid is used in an amount of not more than 50 % by weight based on 1-bromopropane.

An adding amount of the above-mentioned 1-bromopropane (or a total amount of 1-bromopropane and other organic liquid) is 30 to 80 % by weight (hereinafter referred to as "%"), preferably 40 to 60 % on the basis of the amount of the PTFE powder or the total amount of the PTFE powder and filler.

The granular PTFE powder and the filler-containing PTFE powder which are obtained in the process of Embodiment 1 are powders finely pulverized and having an excellent powder flowability and a high apparent density. A molded article obtained from the granular PTFE powder has a high mechanical strength, a high breakdown voltage and a high whiteness.

In Embodiment 1, by the combination of stirring and deagglomeration of the powder, an excellent effect that a granulate finely granulated and having a higher apparent density can be obtained is exhibited.

The deagglomeration can be carried out by means for partly deagglomerating a granulate which has a proper size and has already been formed as a secondary agglomeration of primary particles to decrease a secondary particle size, for example, by a method of stirring with dispersing blades at high speed.

The stirring and deagglomeration may be carried out at the same time or separately.

A deagglomeration mechanism for powder particles means a mechanism being capable of partly deagglomerating a granulate which has a proper size and has already been formed as a secondary agglomeration of primary particles to decrease a secondary particle size.

A granulating equipment used for the preparation process of Embodiment 1 is then explained by means of figures. Figs. 1 and 2 are diagrammatic cross-sectional views of equipment. In Fig. 1, numeral 1 represents a stirring tank, in which a rotation shaft 2 is disposed vertically at the center thereof, stirring blades 3 are disposed radially at the bottom portion of the rotation shaft and the top portion of the shaft is connected to a motor 4. Numeral 5 represents a liquid medium supply port. Numeral 6 represents a deagglomerating machine and numeral 9 represents a motor. The deagglomerating machine 6 is connected to the bottom and top of the stirring tank 1 by means of transfer pipes 7 and 8, respectively. The deagglomerating machine 6 may be one which deagglomerates filler-containing PTFE powder particles contained in the liquid medium by rotating a cutter in the form of turbine blade inside the cylindrical machine while transferring the liquid medium. Examples of suitable deagglomerating machine are, for instance, a disintegrator (available from Komatsu Ltd.) and a Pipe Line Homomixer (available from Tokushu Kika Kogyo Kabushiki Kaisha) equipped with a stator and cutter for cutting and giving an impact. In order to carry out granulation by such equipment, a liquid medium containing a filler-containing PTFE powder is introduced into the stirring tank 1 through the liquid medium supply port 5, stirred with the stirring blades 3, taken out of the stirring tank 1 through the transfer pipe 7 at the bottom of the tank at the same time of the stirring or after the stirring, passed through the deagglomerating machine 6 to deagglomerate formed particles having a large particle size, and then returned to the stirring tank 1 through the transfer pipe 8. Thus the stirring and granulating in the stirring tank 1 and the deagglomeration of particles having a large particle size in the deagglomerating machine 6 are carried out at the same time, continuously or alternately to give granulates having a uniform particle size. In that case, similar granular powder can also be obtained without operating the stirring mechanism by recirculating the liquid medium and deagglomerating particles with the deagglomerating machine 6 only. The reason thereof is assumed to be because the stirring effect can be achieved by recirculating the liquid medium with the deagglomerating machine.

Fig. 2 is a diagrammatic cross-sectional view of another granulating equipment which can be used in the preparation process of Embodiment 1. In the stirring tank 10 are provided a deagglomerater 15 (dispersing blades) and stirring blades 12 mounted on a rotation shaft 11. Numeral 13 represents a motor for the rotation shaft 11 and numeral 16 represents a motor for the deagglomerater 15. The stirring blades 12 are mounted radially and spirally on the boss 14 at the bottom of the rotation shaft 11. Therefore in that case, while the aqueous medium in the tank is stirred with the stirring blades 12 to granulate a filler-containing PTFE powder contained in the aqueous medium, the granulated particles are deagglomerated with the deagglomerater 15.

In preparing a filler-containing granular PTFE powder, it is preferable to introduce the thus-prepared slurry of filler-containing PTFE powder into the stirring tank for granulation and carry out stirring for granulation and deagglomerating. As case demands, the filler-containing PTFE powder previously wetted with a small amount of water may be mixed with the remaining liquid medium in the stirring tank. Also it is possible to adopt a method of previously introducing a liquid medium into the stirring tank, feeding thereto the filler-containing PTFE powder, and then stirring.

The slurry of filler-containing PTFE powder is granulated by an effect of stirring. At the same time of the stirring or after the granulation, large particles, for example, those having a particle size of not less than 2,000 μm are deagglomerated with the deagglomerating machine and finally formed into a powder of particles having a uniform particle size of not more than 500 μm of an average particle size without containing coarse particles having a particle size exceeding 1,000 μm.

(2) Embodiment 2 (granulation method in the state of emulsion)

Embodiment 2 of the present invention relates to the process for preparing the granular PTFE powder by granulating a PTFE powder in water with stirring, which is characterized in that the granulation is carried out with stirring in the presence of 1-bromopropane and a surfactant.

The preparation process of Embodiment 2 is applicable to the cases of granulation of only PTFE powder and granulation of PTFE powder and filler together.

With respect to the PTFE powder, other organic liquid and filler which are used in Embodiment 2 and adding amounts thereof, those explained in Embodiment 1 can be applied as they are.

In Embodiment 2, it appears that the granulation of the PTFE powder is conducted in the droplets of 1-bromopropane and that, since the droplets become smaller and more approximate to a spherical form because of functioning of a surfactant, particularly a nonionic surfactant and/or an anionic surfactant, particles having a smaller size and a form near sphere can be obtained, and an apparent density of the granular powder is increased.

Examples of the above-mentioned nonionic surfactant are, for instance, polyoxyethylamine oxides, alkylamine oxides, polyoxyethylene alkyl ethers, polyoxyethylene alkyl phenyl ethers, polyoxyethylene fatty acid esters,

sorbitan fatty acid esters, polyoxyethylene sorbitan fatty acid esters, glycerine esters, polyoxyethylene alkylamine, segmented polyalkylene glycols having a hydrophobic segment comprising poly(oxyalkylene) unit having 3 or 4 carbon atoms and a hydrophilic segment comprising poly(oxyethylene) unit, the derivatives thereof, and the like.

More particularly, examples of the polyoxyethylamine oxides are dimethyloxyethylamine oxide, and the like.

Examples of the alkylamine oxides are dimethyllaurylamine oxide, dimethyloleylamine oxide, and the like.

Examples of the polyoxyethylene alkyl ethers are polyoxyethylene lauryl ether, polyoxyethylene cetyl ether, polyoxyethylene stearyl ether, polyoxyethylene oleyl ether, polyoxyethylene behenyl ether, and the like.

Examples of the polyoxyethylene alkyl phenyl ethers are polyoxyethylene nonyl phenyl ether, polyoxyethylene octyl phenyl ether, and the like.

Examples of the polyoxyethylene fatty acid esters are polyoxyethylene monolauric acid ester, polyoxyethylene monooleic acid ester, polyoxyethylene monostearic acid ester, and the like.

Examples of the sorbitan fatty acid esters are sorbitan monolauric acid ester, sorbitan monopalmitic acid ester, sorbitan monostearic acid ester, sorbitan monooleic acid ester, and the like.

Examples of the polyoxyethylene sorbitan fatty acid esters are polyoxyethylene sorbitan monolauric acid ester, polyoxyethylene sorbitan monopalmitic acid ester, polyoxyethylene sorbitan monostearic acid ester, and the like.

Examples of the glycerine esters are monomyristic acid glyceryl, monostearic acid glyceryl, monooleic acid glyceryl, and the like.

Examples of the derivatives of the above surfactants are, for instance, polyoxyethylene alkyl phenyl-formaldehyde condensate, polyoxyethylene alkyl ether phosphate, and the like.

As the segmented polyalkylene glycols having a hydrophobic segment and hydrophilic segment, preferable are, for example, those represented by the formula (IV):

$$H-(OCH_2CH_2)_q-(A)_p-(CH_2CH_2O)_q-H \qquad (IV)$$

wherein A is

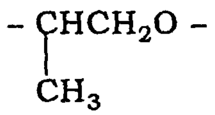

or

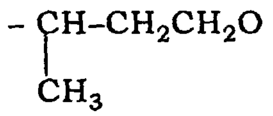

,

p is an integer of 5 to 200, q is an integer of 2 to 400. From the viewpoint of being easily adsorbed in the PTFE resin, it is preferable that p is from 15 to 40 and q is from 7 to 100.

Among them, preferable are amine oxides, polyoxyethylene alkyl phenyl ethers and segmented polyalkylene glycols. Further preferable are polyoxyethylamine oxide and

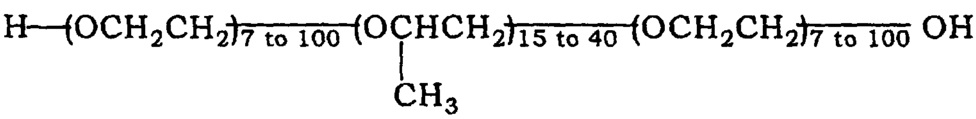

(IV)

As the commercially available surfactants, there can be used, for example, Puronon #102, #104 and #208 (any of them are available from NOF Corporation).

An adding amount of the above-mentioned nonionic surfactant is from 0.01 to 5 %, preferably from 0.1 to 0.3 % on the basis of the PTFE powder (or total amount of the PTFE powder and filler).

By using the nonionic surfactant in the above-mentioned range, there can be obtained a granular powder being nearly in the spherical form and having a small particle size, a narrow particle size distribution, an excellent powder flowability and a large apparent density.

In the present invention, as the surfactant, the anionic surfactant may be used alone or in combination with the nonionic surfactant. When the anionic surfactant is used alone, its amount is from 0.01 to 5 % on the basis of the

PTFE powder (or total amount of the PTFE powder and filler). In case of the combination use of the anionic surfactant with the nonionic surfactant, the amount of the anionic surfactant is from 0.001 to 5 % on the basis of the PTFE powder (or total amount of the PTFE powder and filler). (In case of the combination use, the amount of the nonionic surfactant is the same as mentioned above.)

As the anionic surfactant, there can be used known ones, for example, higher fatty acid and its salt, alkyl sulfate, alkyl sulfonate, alkyl aryl sulfonate, alkyl phosphoric acid ester, and the like. Particularly preferable anionic surfactants are a sulfate of higher alkyl alcohol, for example, sodium lauryl sulfate or a fluorine-containing sulfonic acid type- or carboxylic acid type-anionic surfactant having a fluoroalkyl group or chlorofluoroalkyl group. The typical compounds thereof are those represented by the formula (V):

$$X(CF_2CF_2)_n(CH_2)_mA \qquad \text{(V)}$$

or the formula (VI):

$$X(CF_2CFCl)_n(CH_2)_mA \qquad \text{(VI)}$$

wherein X is hydrogen atom, fluorine atom or chlorine atom, n is an integer of 3 to 10, m is 0 or an integer of 1 to 4, A is carboxyl group, sulfonic acid group or an alkali metal or ammonium residue thereof.

Particularly from the viewpoint of preventing coloration of a molded article, a fluorine-containing anionic surfactant having a perfluoroalkyl group or perchlorofluoroalkyl group is preferable. Examples thereof are those commercially available, for instance, DS-101 available from DAIKIN INDUSTRIES, LTD. which is an aqueous solution of ammonium perfluorooctanoate, and the like.

As the process for preparing the granular PTFE powder of Embodiment 2, there can be used conventional granulation in the state of emulsion. Examples of the methods are, for instance, those mentioned below, but the method is not limited to them. (In case of containing no filler)

A 200-liter granulation tank equipped with cone blades is charged with 120 to 150 liters of ion-exchanged water, and a temperature inside the tank is adjusted to 20° to 28°C.

The granulation tank is charged with 30 kg of the PTFE powder previously pulverized to less than 100 μm.

A given amount of surfactant is added with rotating the cone blades at 400 rpm. Two to three minutes after the addition, a given amount of 1-bromopropane is added.

Subsequently the stirring is continued at 400 rpm for five minutes to make the PTFE powder and 1-bromopropane compatible with each other.

A mixture in the tank is passed through a line mixer outside the tank for external circulation for ten minutes.

The inside temperature of the granulation tank is increased up to 37° to 39°C over 15 to 30 minutes. This heat-up time is changed optionally depending on aimed quality of a granulate.

Further the inside temperature of the granulation tank is kept at 37° to 39°C for 15 to 60 minutes to distill off the organic liquid, i.e. 1-bromopropane. During that keeping period of time, the number of rotations of the cone blades is 400 rpm. That keeping period of time is changed optionally depending on aimed quality of a granulate.

The granulate is separated from water by using a 150 mesh sieve after the stirring is stopped.

A separated granulate is dried at 165°C for 20 hours by using a box type hot air circulating dryer.

(In case of containing filler)

11 Kg of a mixture comprising a filler and a PTFE powder previously pulverized to not more than 200 μm is pre-mixed by using a 75-liter Henschel mixer.

A 10-liter granulation tank containing 5.5 to 6 liters of ion-exchanged water is charged with 2 kg of the above-mentioned mixture of PTFE powder and filler.

Thereto are added 450 to 1,500 ml of 1-bromopropane and then 4 to 200 ml of a 5 % aqueous solution of a surfactant. Then granulation is carried out at 600 to 900 rpm at a temperature range of 23° to 27°C for 5 to 10 minutes by using cone blades.

In addition to the above-mentioned timing for adding the surfactant, there are other timings, for example, prior to adding the mixture of the PTFE powder and the filler, prior to adding 1-bromopropane, etc. From the viewpoint of preferentially adsorbing the surfactant on the liquid-liquid interface (namely, interface between 1-bromopropane and water), it is preferable that the surfactant is added during a period of time after adding 1-bromopropane until the granulation is initiated.

Then the stirring is carried out for two minutes at a stirring speed of 1,000 to 2,000 rpm with dispersing blades of 100 mm diameter.

The granulation for shaping is then carried out for 0 to 15 minutes in the temperature range of 23° to 27°C

at a stirring speed of 600 to 800 rpm with cone blades.

After that, the inside temperature of the granulation tank is raised up to a temperature in the range of 37.5° to 38.0°C over 15 to 30 minutes with stirring, and is kept at that temperature for 0 to 60 minutes. The temperature keeping step is not conducted from the viewpoint of separation of filler in case where the filler is, for example, glass fiber or a metal fiber or metal powder such as bronze powder, gold powder, silver powder, copper powder, stainless steel powder, stainless steel fiber, nickel powder or nickel fiber.

Then, the stirring is stopped, and the granulates are separated from water by using a 150 mesh sieve and dried in an electric oven at 120° to 250°C for 15 to 20 hours to give the filler-containing granular PTFE powder.

In Embodiment 2, too, the stirring arid deagglomeration of the powder can be employed together at granulating in the same manner as in Embodiment 1, thus improving an apparent density and making the particle size fine.

The (filler-containing) granular PTFE powder prepared by the process of Embodiment 2 has excellent powder properties and satisfies characteristic requirements such as a high apparent density, improved fine particle size, a narrow particle size distribution and a low electrostatic charge. Also a molded article obtained from that granular powder has a high mechanical strength and a molded article containing no filler is excellent in electric insulating property and whiteness.

(3) Embodiment 3 (granulation method in the state of slurry)

Embodiment 3 of the present invention relates to granulation method in the state of slurry and the following three processes can be employed.

(A) A process for preparing a filler-containing granular PTFE powder by granulation, in water with stirring, of a PTFE powder prepared by suspension polymerization and a filler; characterized in that the powder and filler are poured in water separately without being pre-mixed, are mixed with stirring in the presence of a surfactant to give a slurry, and then are granulated with stirring in the presence of 1-bromopropane (hereinafter referred to as "Embodiment 3A"),

(B) A process for preparing a filler-containing granular PTFE powder by granulation, in water with stirring, of a PTFE powder prepared by suspension polymerization and a filler; characterized in that the powder is poured in water and stirred in the presence of a surfactant to give a slurry, and then after the filler is added and mixed to the slurry, the mixture is granulated with stirring in the presence of 1-bromopropane (hereinafter referred to as "Embodiment 3B"), and

(C) A process for preparing a filler-containing granular PTFE powder by granulation, in water with stirring, of a PTFE powder prepared by suspension polymerization and a filler; characterized in that a water-containing PTFE powder is wet-pulverized without being subjected to drying, poured in water and stirred in the presence of a surfactant to give a slurry, and then after the filler is added and mixed to the slurry, the mixture is granulated with stirring in the presence of 1-bromopropane (hereinafter referred to as "Embodiment 3C").

In Embodiment 3A, it is not necessary to pre-mix the PTFE powder and the filler, and as a method of pouring them in water, there are, for example, a method of pouring the PTFE powder previously, a method of pouring the filler previously and a method of pouring them simultaneously.

In Embodiment 3A, by pouring the PTFE powder and filler in water, adding a surfactant and then stirring, the PTFE powder and the filler get wet with water and continuation of the stirring results in the state of a uniform mixture of the PTFE powder, filler and water, namely, in the state of slurry which is usually a viscous mixture having a viscosity of from 10 to 1,000 cps.

After the mixture becomes in the state of slurry, though by adding 1-bromopropane and then stirring, the granulation is started in the droplets of 1-bromopropane, the droplets can maintain the state of being smaller and more approximate to a spherical form because of functioning of the surfactant already being present therein.

In Embodiment 3B, by pouring the PTFE powder in water and then adding a surfactant thereto, the PTFE powder gets wet with water and by stirring, a uniform mixture with water in the state of slurry is obtained. Further by adding the filler and then stirring, a uniform mixture of the PTFE powder, filler and water (a viscous mixture having a viscosity of 10 to 1,000 cps) can be prepared.

After adding the filler, the slurry granulation may be carried out in the same manner as in Embodiment 3A.

In Embodiment 3C, as described below, by wet-pulverizing the water-containing PTFE powder without being subjected to drying, pouring the wet-pulverized PTFE powder in water and then adding the surfactant and starting the granulation, the mixture becomes in the state of slurry. Then by adding the filler in the same manner as in Embodiment 3B, the PTFE powder and filler are mixed uniformly.

After adding the filler, the granulation in the state of slurry may be carried out in the same manner as in Embodiment 3A.

In any of the processes of Embodiment 3, a surfactant may be added to water previously.

The PTFE powder used in Embodiment 3 is the same as that used in Embodiment 1. A water content thereof after drying is usually not more than 0.1 % by weight, preferably not more than 0.02 % by weight.

In Embodiment 3, as the PTFE powder, in addition to a dry powder, there can be used a water-containing PTFE powder, for example, one having an average particle size of 200 to 1,000 μm and a water content of 5 to 30 % by weight and prepared by pre-pulverizing, by means of a pipe line homomixer, coarse PTFE particles having an average particle size of 2 to 3 mm, which were prepared by the same suspension polymerization as in the above-mentioned PTFE powder and taken out of the polymerization system. Then the so-prepared water-containing PTFE powder is poured into the JIYU mill described below and wet-pulverized under the conditions of a motor power of 2.2 kW and a treating capacity of 1.0 to 100 kg/hr by using a screen having plural holes of 0.1 to 0.3 mm diameter as a perforated panel for classification. Thus a powder having an average particle size of 20 to 100 μm and a water content of 5 to 30 % by weight can be obtained. When the thus obtained water-containing powder is used, a drying step required for preparing the above-mentioned PTFE powder is not necessary.

In Embodiment 3C, the wet-pulverizing of the water-containing PTFE powder is carried out by means of a pulverizing machine which is of wet pulverization type and employs an impact force for the pulverization. Though various pulverizing machines of that type are known, in the above-mentioned wet-pulverizing, it is desirable that at the same time as the pulverization, only fine powder pulverized to the desired particle size can be taken out continuously. For that reason, when the pulverizing machine is selected from the types which apply an impact force by a hammer, it is desirable that a peripheral speed of the hammer is as high as possible.

One of the pulverizing machines satisfying such requirements is, for example, "JIYU mill" available from Nara Kikai Seisakusho Kabushiki Kaisha. That pulverizing machine has a pulverizing chamber in the form of a cylinder compressed laterally, and plural rod-like protrusions having a rectangular or elliptical sectional form are provided on the facing two inside walls of the chamber. A disc-like rotor is disposed in parallel with the two inside walls in the center of the pulverizing chamber and equipped with the same rod-like protrusions on its both surfaces, which are arranged not to collide with the rod-like protrusions on the inside walls when the rotor is rotated.

The above-mentioned water-containing PTFE powder is fed to the center of the pulverizing machine and blown off toward the peripheral direction of the rotor by a centrifugal force of the rotating rotor, thus colliding with the rod-like protrusions of the rotor and side walls to be pulverized by an impact force. There is provided a perforated panel in the form of a ring on the periphery in the rotating direction of the rotor. Only the particles pulverized to the size smaller than the perforated holes on the perforated panel pass through the holes and are taken outside the perforated panel. As the perforated panel, there may be used a metal net, a perforated thin metal sheet or various other ones. The diameter of the obtained particles varies depending on the diameter of the perforated holes. The smaller the hole diameter is, the smaller the particle size of the obtained particles is. However, since the particles are wet with water, the diameter of the particles taken out actually becomes fairly smaller than the diameter of the holes perforated on the perforated panel.

It appears that one of the reasons why the powder can be finely pulverized by the above-mentioned JIYU mill even under wet condition is that a high rotational speed of the rotor, that is, a peripheral speed of about 100 m/s can be obtained.

As a hammer type pulverizing machine capable of obtaining a peripheral speed of not less than that of the JIYU mill, there are, for example, a "Coloplex" and "Contraplex" available from Hosokawa Mikuron Kabushiki Kaisha, a "Fine Mill" available from Nippon Pneumatic Mfg. Co., Ltd. and the like. Those machines are all suitable for pulverizing under dry condition, and when used under the presence of water, there occur phenomena such that the peripheral speed is decreased and that since pneumatic classification method is used as a classifying mechanism, when the pulverized particles are wet, pneumatic classification does not function and the particles having a diameter larger than desired are classified and discharged. Also basically pulverizing machines of wet-pulverization type, for example, a shearing mill such as a colloid mill or a grinding machine cannot be used because the PTFE powder is subject to decomposition due to an extreme shearing force.

In Embodiment 3, too, the granulation may be carried out by combining the stirring and deagglomeration of the powder in the same manner as in Embodiment 2.

Other organic liquid, filler and surfactant which are used in Embodiment 3, and amounts thereof can be the same as those explained in Embodiment 1.

Examples of the preparation processes of Embodiments 3A to 3C are, for instance, those mentioned below.

Embodiment 3A

A ten-liter granulation tank is charged with I to 5 liters of ion-exchanged water, and 0.9 to 1.9 kg of a PTFE powder and then 0.075 to 0.8 kg of a filler are added thereto.

Then 4 to 200 ml of 5 % aqueous solution of a surfactant is added and the mixture is stirred with dispersing

blades of 100 mm diameter for 2 to 5 minutes at a stirring speed of 2,000 to 3,000 rpm. Thus the mixture becomes in the state of slurry, and the stirring is continued further for 5 to 10 minutes.

Further 450 to 1,500 ml of 1-bromopropane is added, and the granulation is carried out by stirring with the dispersing blades of 100 mm diameter for 1 to 2 minutes at a stirring speed of 1,000 to 2,000 rpm.

Then 0.5 to 5 liters of water is added, and the granulation is further carried out for shaping of the powder at a temperature of 10° to 30°C at a stirring speed of 600 to 900 rpm for 0 to 30 minutes by using cone blades.

After that, the inside temperature of the granulation tank is raised up to a temperature in the range of 37.5° to 38.0°C over 15 to 60 minutes and is kept at that temperature for 0 to 60 minutes.

This temperature keeping step and the above-mentioned mixing step with the dispersing blades immediately after the addition of 1-bromopropane are not conducted from the viewpoint of the separation of filler in case where the filler is, for example, glass fiber or a metal fiber or metal powder such as bronze powder, gold powder, silver powder, copper powder, stainless steel powder, stainless steel fiber, nickel powder or nickel fiber.

Then, the stirring is stopped, the granulates are separated from water by using a 150 mesh sieve and the granulates are dried in an electric oven at 165°C for 16 hours to give the filler-containing granular PTFE powder.

The preparation process of Embodiment 3A can give a filler-containing granular PTFE powder which satisfies requirements for powder characteristics, for example, a high apparent density, improved fine particle size, a narrow particle size distribution and a low electrostatic charge, has physical properties giving a molded article having a smooth surface and provides a molded article with excellent mechanical strength, electric insulating property and whiteness. Particularly since the particle size distribution is narrow, complicated steps, for example, a step of taking out particles of a small size with a sieve like a conventional method and a step of pre-mixing the PTFE powder and the filler, are not necessary. Thus, the filler-containing granular PTFE powder which cannot be prepared by a conventional process can be prepared.

Embodiment 3B

A ten-liter granulation tank is charged with 1 to 5 liters of ion-exchanged water, and 0.9 to 1.9 kg of a PTFE powder is added thereto.

Then 4 to 200 ml of 5 % aqueous solution of a surfactant is added and the mixture is stirred with dispersing blades of 100 mm diameter for 2 to 5 minutes at a stirring speed of 2,000 to 3,000 rpm. Thus the mixture becomes in the state of slurry.

Then 0.075 to 0.8 kg of a filler is added and the mixture is stirred with dispersing blades of 100 mm diameter for 2 to 15 minutes at a stirring speed of 2,000 to 4,000 rpm.

Further 1-bromopropane is added. A step after the addition until the filler-containing granular PTFE powder is obtained is the same as in Embodiment 3A.

The preparation process of Embodiment 3B can give a filler-containing granular PTFE powder which satisfies requirements for powder characteristics, for example, a high apparent density, improved fine particle size, a narrow particle size distribution and a low electrostatic charge, has physical properties giving a molded article having a smooth surface and provides a molded article with excellent physical strength, electric insulating property and whiteness. Particularly since the particle size distribution is narrow, complicated steps, for example, a step of taking out particles of a small size with a sieve like a conventional method and a step of pre-mixing the PTFE powder and the filler, are not necessary. Thus, the filler-containing granular PTFE powder which cannot be prepared by a conventional process can be prepared.

Embodiment 3C

Coarse PTFE particles having an average particle size of 2 to 3 mm and taken out of the polymerization system in usual suspension polymerization method are pre-pulverized by means of a pipe line homomixer to give a water-containing PTFE powder having an average particle size of 200 to 1,000 μm and a water content of 5 to 30 %.

Then the so-prepared water-containing PTFE powder is poured into the JIYU mill described above and wet-pulverized under the conditions of a motor power of 2.2 kW and a treating capacity of 1.0 to 100 kg/hr by using a screen having plural holes of 0.1 to 0.3 mm diameter as a perforated panel for classification. Thus a powder having an average particle size of 20 to 100 μm and a water content of 5 to 30 % can be obtained. A step after adding 1.575 to 2.6 kg of the powder to ion-exchanged water until the filler-containing granular PTFE powder of the present invention is obtained is the same as in Embodiment 3B.

The preparation process of Embodiment 3C can give a filler-containing granular PTFE powder which satisfies requirements for powder characteristics, for example, a high apparent density, improved fine particle size, a narrow particle size distribution and a low electrostatic charge, has physical properties giving a molded article having a smooth surface and provides a molded article with excellent physical strength, electric insulating property and whiteness. Particularly since the particle size distribution is narrow, complicated steps, for example, a step of taking out particles of a small size with a sieve like a conventional method and a step of pre-mixing the PTFE powder and the filler, are not necessary. Thus, the filler-containing granular PTFE powder which cannot be prepared by a conventional process can be prepared.

(4) Embodiment 4 (granulation method by tumbling)

Embodiment 4 of the present invention relates to the process for preparing a granular PTFE powder by granulating, in water with stirring a PTFE powder and filler, which is characterized in that a mixture of the powder and filler is wetted with 1-bromopropane and a mechanical force is applied to the mixture.

The feature of Embodiment 4 is to wet a mixed powder of the PTFE powder and filler with 1-bromopropane in the absence of water, in which the wetting means a state that the PTFE powder and filler get wet with 1-bromopropane. The wet state varies depending on kind and amount of the filler. An adding amount of 1-bromopropane is from 20 to 100 parts, preferably from 30 to 60 parts based on 100 parts of the mixed powder of PTFE powder and filler.

The PTFE powder, filler and mixing ratio thereof which are described in Embodiment 1 can be applied in Embodiment 4.

In Embodiment 4, a mechanical force is applied to the mixed powder of PTFE powder and filler after the mixed powder is wetted with 1-bromopropane. It is preferable that the mechanical force is applied, for example, by tumbling.

The tumbling used in Embodiment 4 means that the PTFE particles rotate and move around in the granulator while the particles are rubbed with each other or brought into contact to inner side walls of the granulator. Examples of the granulator used for granulation by tumbling the PTFE powder are, for instance, a rotating disc type granulator, V blender, C blender, a granulator with a rotating side plate and a rotating inclined disc, etc.

Figs. 3 and 4 are diagrammatical cross-sectional views for explaining rotating disc type granulators which can be used in Embodiment 4.

In Fig. 3, numeral 21 represents a rotating disc type granulator comprising a rotating disc 22, a side plate 23 and a pulverizer 24 with chopper blades 25. The side plate 23 comprises a portion B being at a right angle to the rotating disc 22 and a conical portion C inclined inward at an angle of $\theta$. A represents a diameter of the bottom of the granulator. Well-balanced design of these components can make smooth a flow 26 of the PTFE powder. As such a granulator, there is known, for example, High Speed Mixer FS-10 available from Fukae Kogyo Kabushiki Kaisha.

The position and size of the pulverizer 24 have great effect on the mixing, tumbling and granulation of the PTFE powder. The nearest distance between the chopper blade 25 and the rotating disc 22 is 2 to 3 mm. All of the powders dispersed in a vessel strike on the chopper blade 25 so that an irregular agglomerate produced at the time of the granulation can be pulverized.

When granulating by adding a liquid, since a particle size of the granulated powder is determined by the number of rotations of the pulverizer 24, the pulverizer is of non-stage transmission type by employing an inverter.

Even if the number of rotations of the rotating disc 22 is constant, there is no problem. The number of rotations may be set properly so that the flow 26 of the powder is in good condition as shown in Fig. 4.

In Fig. 4, numerals 21 to 26 are the same as above. Numeral 27 represents a PTFE powder.

A peripheral speed of the rotating disc 22 varies depending on kind of the powder. A suitable speed is from about 5 m/second to about 10 m/second.

Examples of the process for preparing the granular PTFE powder of Embodiment 4 are, for instance, the following process, etc.

The above-mentioned rotating disc type granulator (capacity: 10 liters) is charged with 1,000 g of a PTFE powder, and the rotating disc and pulverizer are rotated at 600 to 800 rpm and 4,000 to 4,600 rpm, respectively to mix the powder uniformly over 5 to 10 minutes.

Then while maintaining the above-mentioned number of rotations, 400 to 1,500 ml of an aqueous solution containing 0.3 to 1 % by weight of a specific nonionic surfactant is added over 2 to 5 minutes and is made compatible with the powder over 0.5 to 3 minutes.

Subsequently the number of rotations of the rotating disc and pulverizer is adjusted to 50 to 800 rpm and 50 to 200 rpm, respectively and a jacket is steam-heated to heat a product in the granulator to a temperature in the range of 70° to 75°C over 10 to 30 minutes, followed by tumbling for 0 to 20 minutes for granulation. The granulation carried out in the manner mentioned above makes the apparent density of the granular powder higher and the shape of particles in the powder spherical.

Then the product is taken out and dried at 165°C for 16 hours in an electric oven to give the granular PTFE powder.

In Embodiment 4, the granular powder having, for example, physical properties of the powder such as a high flowability and high apparent density and giving physical properties of the molded article can be obtained.

The process of the present invention is then explained by means of examples, but the present invention is not limited to them.

Methods for measuring each physical property of the granular PTFE powder prepared in the present invention are as follows.

Apparent density: Measured in accordance with JIS K 6891-5.3

Average particle size after pulverization (Primary particle size):

Wet sieve method: JIS standard sieves of 20 mesh (sieve opening: 840 μm), 250 mesh (sieve opening: 62 μm), 270 mesh (sieve opening: 53 μm), 325 mesh (sieve opening: 44 μm) and 400 mesh (sieve opening: 37 μm) are used. First, the 20 mesh sieve is placed on the 250 mesh sieve, and 5 g of a sample powder is put on the 20 mesh sieve. By spraying carbon tetrachloride carefully with a sprayer at a rate of about 3 liters/$m^2$ for about 30 seconds, the powder is rinsed on the lower sieve. When the sample powder has been rinsed completely, the upper sieve is removed and spraying all over the lower sieve is conducted for about four minutes. After that, the lower sieve is air-dried and a weight of the dried powder remaining thereon is measured. A series of the above-mentioned steps are repeated by using the 20 mesh sieve and each of the other three sieves of smaller meshes, respectively, and 5 g each of new sample powder is used. In order to obtain an accumulated weight percentage, the weights of the powder remaining on each sieve are multiplied by 20 and then those obtained values are plotted on a logarithmic probability paper to openings of each sieve. Those plotted points are connected with a line, particle sizes corresponding to the accumulated weight percentages 50($d_{50}$) and 84($d_{34}$) are read, and wet sieve size ($d_{ws}$) is calculated by the following equation.

$$\log_e d_{ws} = \log_e d_{50} - \frac{1}{2}\left(\log_e \frac{d_{34}}{d_{50}}\right)^2$$

Flowability: Measured in accordance with the method described in JP-A-3-259925.

Namely, there is used a measuring device comprising a support base 42, an upper hopper 31 and a lower hopper 32. The both hoppers are aligned on their center lines and supported on the support base 42 as shown in Fig. 5 (corresponding to Fig. 3 described in JP-A-3-259925). The upper hopper 31 has an inlet 33 of 74 mm diameter, an outlet 34 of 12 mm diameter and a partition plate 35. The height from the inlet 33 to the outlet 34 is 123 mm. The partition plate 35 is provided on the outlet 34, and thereby the powder in the hopper can be kept therein and dropped optionally. The lower hopper 32 has an inlet 36 of 76 mm diameter, an outlet 37 of 12 mm diameter and a partition plate 38. The height from the inlet 36 to the outlet 37 is 120 mm, and the partition plate 38 is provided on the outlet 37 like the upper hopper. The upper hopper and the lower hopper are adjusted so that the distance between the both partition plates is 15 cm. In Fig. 5, numerals 39 and 40 represent outlet covers of each hopper, and numeral 41 represents a vessel for receiving the dropped powder.

Prior to measuring the flowability, about 200 g of powder is allowed to stand for not less than four hours in a room, the temperature of which is adjusted to 23.5° to 24.5°C, and then sieved with a 10 mesh sieve (sieve opening: 1,680 μm). The measurement of the flowability is carried out at the same temperature.

(I) At first, immediately after the upper hopper 31 is charged with just a cup of powder by using a 30 cc cup, the partition plate 35 is pulled out to drop the powder into the lower hopper. When the powder does not drop, the powder is stuck with a wire. After the powder has dropped completely into the lower hopper 32, the dropped powder is allowed to stand for 15 ± 2 seconds, and then the partition plate 38 of the lower hopper is pulled out to see whether or not the powder is dropped from the outlet 37. When the powder is dropped completely within eight seconds, the powder is estimated to have been dropped as required.

(II) The same steps as above are repeated three times to see if the powder is dropped as required. In case where the powder is dropped satisfactorily twice or more, the flowability of the powder is estimated to be "Good". In case where the powder is never dropped, the flowability of the powder is estimated to be "Not good". In case where in three series of the dropping test, the powder has been dropped only one time, the dropping test is further conducted twice, and when the two series of the dropping test are both satisfactory, the flowability is estimated to be "Good". In other cases, the flowability is estimated to be "Not good".

(III) With respect to the powder estimated to be "Good", the upper hopper is charged with two cups of powder by using the same 30 cc cup, and the dropping test of the powder is conducted in the same manner as above. When as a result, the flowability is estimated to be "Good", the number of cups filled with the powder is increased successively and the dropping test is continued until the flowability is estimated to be "Not good". The dropping test is conducted up to eight cups at most. The powder having flowed out from the lower hopper in the previous dropping test may be re-used.

(IV) The larger the amount of the PTFE powder is, the more difficult to drop.

The number of cups when the flowability is estimated to be "Not good" is subtracted by 1, and the obtained value is taken as "Flowability" of the powder.

Average particle size and particle size distribution A of granular powder:

Standard sieves of 10, 20, 32, 48, 60 and 80 meshes (inch mesh) are placed in that order from the top, and granular PTFE powder is put on the 10 mesh sieve. The sieves are vibrated to drop smaller particles downward through each sieve in order. Then after the ratio of the powder remaining on each sieve is obtained by %, accumulated percentages (ordinate) of each remaining powder to the openings of each sieve (abscissa) are plotted on the logarithmic probability paper, and those points are connected with a line. The particle size, the proportion of which is 50 % on that line, is obtained and is regarded as an average particle size. Also percents by weight of the granular powder remaining on each sieve of 10, 20, 32, 48, 60 and 80 meshes are regarded as the particle size distribution A.

Particle size distribution B:

The particle size distribution B is a proportion in weight of the particles having a diameter 0.7 to 1.3 times the average particle size on the basis of the whole particles, and is calculated by multiplying the average particle size by 0.7 or 1.3. The obtained values are plotted on the accumulated weight percentage curve, and thus the weight percentage is obtained.

Tensile strength (hereinafter may be referred to as "TS") and elongation (hereinafter may be referred to as "EL"):

A die having an inner diameter of 100 mm is charged with 25 g of powder, and a pressure is applied gradually over about 30 seconds until the final pressure becomes about 500 kg/cm$^2$. Then that pressure is kept for two minutes to give a pre-molded article. The pre-molded article is taken out of the die mold and put in an electric oven being kept at 365°C to be subjected to sintering for three hours. Then the sintered article is punched with a JIS dumbbell No. 3 to give a sample. A stress at break and elongation of the sample are measured in accordance with JIS K 6891-5.8 by stretching at a stretching rate of 200 mm/min with an autograph having a gross weight of 500 kg.

Z value (Whiteness):

A 50 mm diameter die was filled with 200 g of a granular powder and then maintained at a molding pressure of 500 kg/cm$^2$ for five minutes. the obtained pre-molded article (diameter: about 50 mm, thickness: 50 mm) was heated up from room temperature to 365°C at a temperature raising rate of 50°C/hr. After having been maintained at 365°C for 5.5 hours, the pre-molded article was cooled at a cooling rate of 50°C/hr and then the molded article was cut crosswise with a lathe at the point about 25 mm from its end (at its center portion). Then a Z value on the center of the cut portion was measured by the Z value measuring method of the XYZ colorimetric system of Commission International de Leclairage.

Break down voltage

A block of a molded article which is produced in the same manner as for measurement of the Z value is cut to give a 0.1 mm thick skived sheet. The break down voltage is measured by using the obtained skived sheet according to JIS K 6891.

EXAMPLE 1

A ten-liter granulation tank was charged with 6.5 liters of ion-exchanged water, followed by the addition of 1.5 kg of a PTFE powder (POLYFLON M-111 modified PTFE available from DAIKIN INDUSTRIES, LTD.) having an average particle size of 120 μm after the pulverization. Then after adding 850 ml of 1-bromopropane, the mixture is granulated by stirring at 800 rpm (at 25°C ± 2°C for five minutes) by using cone blades.

Further the stirring was continued for two minutes at 2000 rpm with dispersing blades of 100 mm diameter. Particles having relatively large particle size were subjected to deagglomeration to be formed into a granular powder of not more than 500 μm. Then, granulation was carried out for shaping of the granular powder under stirring at 800 rpm

(25°C ± 2°C for 10 minutes) by using cone blades.

Subsequently, the stirring was stopped after the temperature in the tank was raised up to 68°C over 30 minutes. The granular powder was collected by using a 150 mesh sieve.

The obtained granular powder was dried in an electric oven (at 165°C for 16.5 hours).

An apparent density, flowability, particle size distribution A, average particle size and particle size distribution B of the obtained granular PTFE powder were determined by the methods mentioned above. The results are shown in Table 1.

COMPARATIVE EXAMPLE 1

The granulation was carried out in the same manner as in Example 1 except that 900 ml of methylene chloride was used instead of 1-bromopropane and a heat-up temperature was changed to 38°C. Then the obtained granular PTFE powder was evaluated in the same manner as in Example 1.

The results are shown in Table 1.

TABLE 1

| | Ex. 1 | Com. Ex. 1 |
|---|---|---|
| Conditions for preparation | | |
| Organic liquid | 1-bromopropane | Methylene chloride |
| PTFE/organic liquid ratio (kg/ml) | 1.5/850 | 1.5/900 |
| Surfactant | - | - |
| Filler (part by weight) (based on 100 parts by weight of PTFE) | - | - |
| Characteristics of granular PTFE powder | | |
| Apparent density ($g/cm^3$) | 0.761 | 0.752 |
| Flowability | 5.5 | 3.0 |
| Particle size distribution A (%) | | |
| 10 on | 0.0 | 1.9 |
| 20 on | 9.1 | 43.9 |
| 32 on | 42.2 | 15.8 |
| 48 on | 18.8 | 9.6 |
| 60 on | 3.5 | 5.7 |
| 80 on | 6.1 | 0.0 |
| 80 pass | 18.8 | 23.1 |
| Average particle size (μm) | 513 | 750 |
| Particle size distribution B (%) | 33.9 | 22.0 |
| Physical properties of molded article | | |
| Mechanical properties | | |
| TS ($kgf/cm^2$) | 347 | 339 |
| EL (%) | 392 | 389 |
| Break down voltage (V) | 9.1 | 6.2 |
| Z value | 102 | 101 |

In the column of the particle size distribution A of Table, 10 on, 20 on, 32 on, 48 on, 60 on and 80 on indicate the percentages of particles remaining on the 10 mesh, 20 mesh, 32 mesh, 48 mesh, 60 mesh and 80 mesh sieves, respectively. And, 80 pass represents the percentage of the particles passed through the 80 mesh sieve.

EXAMPLE 2

A ten-liter granulation tank was charged with 6.5 liters of ion-exchanged water, and 1.5 kg of a pulverized PTFE powder (POLYFLON M-111 available from DAIKIN INDUSTRIES, LTD.) having an average particle size of 120 µm. Then, 75 ml of a 20 % aqueous solution of Puronon #102 (ethylene oxide block copolymer of polypropylene glycol (molecular weight of polyoxypropylene segment: 1,250, molecular weight of polyoxyethylene segment: 250) available from NOF Corporation) which is a nonionic surfactant and 850 ml of 1-bromopropane were added, and granulation was carried out by stirring at 800 rpm (at 25°C ± 2°C for 10 minutes) with cone blades.

Further the stirring was continued for two minutes at 2000 rpm with dispersing blades of 100 mm diameter. Particles having relatively large particle size were subjected to deagglomeration to be formed into a granular powder of not more than 500 µm. Then, granulation was carded out for shaping of the granular powder under stirring at 800 rpm (25°C ± 2°C for 10 minutes) by using cone blades.

The stirring was stopped after the temperature in the tank was raised up to 68°C over 30 minutes. The granular powder was collected by using a 150 mesh sieve.

The obtained granular powder was dried in an electric oven (at 165°C for 16.5 hours).

An apparent density, flowability, particle size distribution A, average particle size and particle size distribution B of the obtained granular PTFE powder were determined by the methods mentioned above. The results are shown in Table 2.

COMPARATIVE EXAMPLE 2

The granulation was carried out in the same manner as in Example 2 except that 900 ml of methylene chloride was used instead of 1-bromopropane and a heat-up temperature was changed to 38°C. Then the obtained granular PTFE powder was evaluated in the same manner as in Example 1.

The results are shown in Table 2.

TABLE 2

| | Ex. 2 | Com. Ex. 2 |
|---|---|---|
| Conditions for preparation | | |
| Organic liquid | 1-bromopropane | Methylene chloride |
| PTFE/organic liquid ratio (kg/ ml) | 1.5/850 | 1.5/900 |
| Surfactant | Puronon #102 | Puronon #102 |
| Filler (part by weight) (based on 100 parts by weight of PTFE) | - | - |
| Characteristics of granular PTFE powder | | |
| Apparent density ($g/cm^3$) | 0.784 | 0.768 |
| Flowability | 8.0 | 3.5 |
| Particle size distribution A (%) | | |
| 10 on | 0.0 | 0.0 |
| 20 on | 1.8 | 5.9 |
| 32 on | 25.0 | 41.9 |
| 48 on | 36.9 | 29.3 |
| 60 on | 9.7 | 4.9 |
| 80 on | 10.7 | 5.1 |
| 80 pass | 14.8 | 11.6 |
| Average particle size (μm) | 374 | 485 |
| Particle size distribution B (%) | 41.8 | 39.6 |
| Physical properties of molded article | | |
| Mechanical properties | | |
| TS ($kgf/cm^2$) | 371 | 350 |
| EL (%) | 383 | 382 |
| Break down voltage (V) | 8.7 | 7.6 |
| Z value | 100 | 99 |

EXAMPLE 3

A ten-liter granulation tank was charged with 1.5 liters of ion-exchanged water, and then thereto were added in order of 1.275 kg (dry basis) of a pulverized PTFE powder (POLYFLON M-111 available from DAIKIN INDUSTRIES, LTD.) having an average particle size of 120 μm and 0.225 kg of glass fibers (EPG40M-10A available from Nippon Denki Glass Kabushiki Kaisha, average diameter: 12 μm, average fiber length: 80 μm) which had been subjected to water-repellent-treatment previously with an aminosilane coupling agent.

Then, 90 ml of aqueous solution of 5 % by weight of an ethylene oxide block polymer of polypropylene glycol (Puronon #102 available from NOF Corporation) was added as a specific nonionic surfactant.

Subsequently the stirring was carried out with dispersing blades of 100 mm diameter at a stirring speed of 3,000 rpm for two minutes, and the PTFE powder and the filler got wet with water and became in the state of viscous slurry having a viscosity of 10 to 1,000 cps, followed by mixing with stirring further for three minutes in that state.

Then, 700 ml of 1-bromopropane was added. And, granulation was carried out with stirring at 800 rpm (at 25°C ± 2°C for 5 minutes) by using cone blades.

Further the stirring was continued for two minutes at 2000 rpm with dispersing blades of 100 mm diameter. Particles having relatively large particle size were subjected to deagglomeration to be formed into a granular powder of not more than 500 μm.

Then 4.5 liters of water was added, and the granulation was further carried out, for shaping of the granular

powder, at 25°C ± 2°C for 15 minutes under stirring at 800 rpm by using cone blades.

Subsequently, the stirring was stopped after the temperature in the tank was raised up to 38°C over 20 minutes. The granulates were separated from water by using a 150 mesh sieve and dried in an electric oven at 165°C for 16 hours to obtain a filler-containing PTFE granular powder of the present invention. Evaluations of the obtained granular PTFE powder were carried out in the same manner as in Example 1.

The results are shown in Table 3.

COMPARATIVE EXAMPLE 3

The granulation was carried out in the same manner as in Example 3 except that 750 ml of methylene chloride was used instead of 700 ml of 1-bromopropane. Then the obtained granular PTFE powder was evaluated in the same manner as in Example 1.

The results are shown in Table 3.

TABLE 3

| | Ex. 3 | Com. Ex. 3 |
|---|---|---|
| Conditions for preparation | | |
| Organic liquid | 1-bromopropane | Methylene chloride |
| PTFE/organic liquid ratio (kg/ml) | 1.5/800 | 1.5/850 |
| Surfactant | Puronon #102 | Puronon #102 |
| Filler (part by weight) (based on 100 parts by weight of PTFE) | Glass fiber (20) | Glass fiber (20) |
| Characteristics of granular PTFE powder | | |
| Apparent density (g/cm$^3$) | 0.84 | 0.80 |
| Flowability | 8.0 | 8.0 |
| Particle size distribution A (%) | | |
| 10 on | 0.2 | 0.4 |
| 20 on | 1.0 | 1.6 |
| 32 on | 38.6 | 40.6 |
| 48 on | 54.6 | 51.0 |
| 60 on | 4.2 | 3.8 |
| 80 on | 1.2 | 2.0 |
| 80 pass | 0.2 | 0.6 |
| Average particle size (μm) | 460 | 480 |
| Particle size distribution B (%) | 59.6 | 56.8 |
| Physical properties of molded article | | |
| Mechanical properties | | |
| TS (kgf/cm$^2$) | 213 | 208 |
| EL (%) | 320 | 318 |

INDUSTRIAL APPLICABILITY

According to the present invention, in which a non-flammable bromine-containing organic solvent, particularly 1-bromopropane having a boiling point of 0 to 150°C is used as an organic liquid, it is possible to exhibit granulation performance equal to a flon type organic solvent which gives particularly excellent performance in various processes for preparing a granular PTFE powder, to provide a granular PTFE powder being excellent in powder characteristics safely at low cost, and to contribute to lowering of depletion of the ozone layer and prevention of global warming.

## Claims

1. A process for preparing a granular polytetrafluoroethylene powder by granulating a polytetrafluoroethylene powder in the presence of a non-flammable bromine-containing organic solvent having a boiling point of 0 to 150°C.

2. The process for preparing the granular polytetrafluoroethylene powder of Claim 1, wherein the bromine-containing organic solvent is 1-bromopropane.

3. A process for preparing a granular polytetrafluoroethylene powder by granulation, in water with stirring, of a polytetrafluoroethylene powder; characterized in that the granulation is carried out with stirring in the presence of a non-flammable bromine-containing organic solvent having a boiling point of 0 to 150°C.

4. The process for preparing the granular polytetrafluoroethylene powder of Claim 3, wherein the bromine-containing organic solvent is 1-bromopropane.

5. The process for preparing the granular polytetrafluoroethylene powder of Claims 3 and 4, wherein the polytetrafluoroethylene powder is granulated in the presence of a filler.

6. A process for preparing a granular polytetrafluoroethylene powder by granulation, in water with stirring, of a polytetrafluoroethylene powder; characterized in that the granulation is carried out with stirring in the presence of a surfactant and a non-flammable bromine-containing organic solvent having a boiling point of 0 to 150°C.

7. The process for preparing the granular polytetrafluoroethylene powder of Claim 6, wherein the bromine-containing organic solvent is 1-bromopropane.

8. The process for preparing the granular polytetrafluoroethylene powder of Claims 6 and 7, wherein the polytetrafluoroethylene powder is granulated in the presence of a filler.

9. The processes for preparing the granular polytetrafluoroethylene powder of Claims 6 to 8, wherein an amount of the surfactant is from 0.01 to 5 % by weight on the basis of an amount of the polytetrafluoroethylene powder or a total amount of polytetrafluoroethylene powder and filler.

10. The process for preparing the granular polytetrafluoroethylene powder of Claims 6 and 7, wherein the surfactant is a nonionic surfactant and/or an anionic surfactant.

11. The process for preparing the granular polytetrafluoroethylene powder of Claim 10, wherein the nonionic surfactant has a hydrophobic segment comprising a poly(oxyalkylene) unit having 3 or 4 carbon atoms and a hydrophilic segment comprising a poly(oxyethylene) unit.

12. The process for preparing the granular polytetrafluoroethylene powder of Claim 10, wherein the anionic surfactant is a fluorine-containing surfactant having a perfluoroalkyl group or perchlorofluoroalkyl group as a hydrophobic group.

13. A process for preparing a granular polytetrafluoroethylene powder by granulation, in water with stirring, of a polytetrafluoroethylene powder and a filler; characterized in that the powder and filler are poured in water separately without being mixed previously, mixed with stirring in the presence of a surfactant to give a slurry, and then granulated with stirring in the presence of a non-flammable bromine-containing organic solvent having a boiling point of 0 to 150°C.

14. The process for preparing the granular polytetrafluoroethylene powder of Claim 13, wherein the bromine-containing organic solvent is 1-bromopropane.

15. A process for preparing a granular polytetrafluoroethylene powder by granulation, in water with stirring, of a polytetrafluoroethylene powder and a filler; characterized in that the polytetrafluoroethylene powder is poured in water and stirred in the presence of a surfactant to give a slurry, and then after the filler is added and mixed to the slurry, the mixture is granulated with stirring in the presence of a non-flammable bromine-containing organic solvent having a boiling point of 0 to 150°C.

**16.** The process for preparing the granular polytetrafluoroethylene powder of Claim 15, wherein the bromine-containing organic solvent is 1-bromopropane.

**17.** A process for preparing a filler-containing granular polytetrafluoroethylene powder by granulation, in water with stirring, of a polytetrafluoroethylene powder and a filler; characterized in that the water-containing polytetrafluoroethylene powder after polymerization is wet-pulverized without being subjected to drying and then poured in water and stirred in the presence of a surfactant to give a slurry, and after the filler is added and mixed to the slurry, the mixture is granulated with stirring in the presence of a non-flammable bromine-containing organic solvent having a boiling point of 0 to 150°C.

**18.** The process for preparing the granular polytetrafluoroethylene powder of Claim 17, wherein the bromine-containing organic solvent is 1-bromopropane.

**19.** The process for preparing the granular polytetrafluoroethylene powder of any of Claims 13 to 18, wherein an amount of the surfactant is from 0.01 to 5 % by weight on the basis of a total amount of polytetrafluoroethylene powder and filler.

**20.** A process for preparing a granular polytetrafluoroethylene powder by granulation with stirring of a polytetrafluoroethylene powder and a filler in the absence of water; characterized in that a mixture of the powder and filler is wetted with a non-flammable bromine-containing organic solvent having a boiling point of 0 to 150°C and a mechanical force is applied to the mixture.

**21.** The process for preparing the granular polytetrafluoroethylene powder of Claim 20, wherein the bromine-containing organic solvent is 1-bromopropane.

**22.** The process for preparing the granular polytetrafluoroethylene powder of Claims 20 and 21, wherein a method of applying a mechanical force is a tumbling method.

**23.** The process for preparing the granular polytetrafluoroethylene powder of any of Claims 1 to 22, wherein the polytetrafluoroethylene is a modified polytetrafluoroethylene obtained by copolymerizing 99 to 99.999 % by mole of tetrafluoroethylene and 1 to 0.001 % by mole of a perfluoro(vinyl ether).

FIG. 1

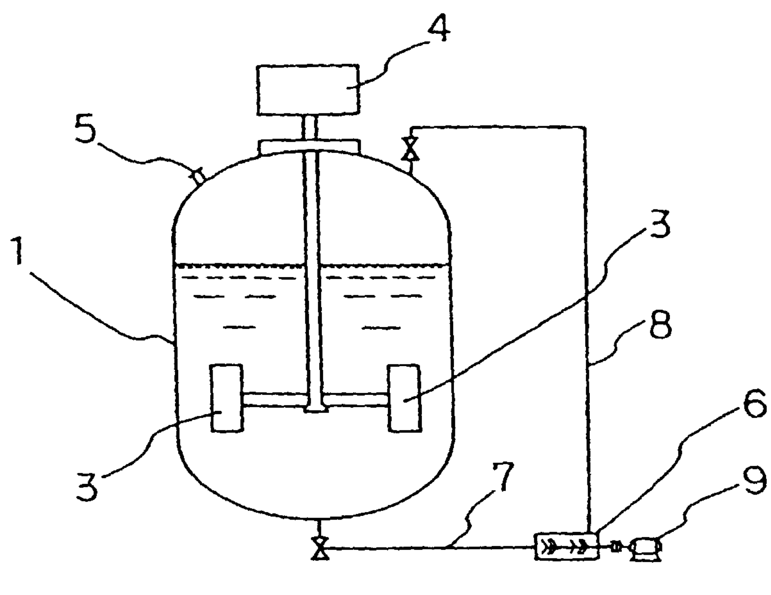


FIG. 2

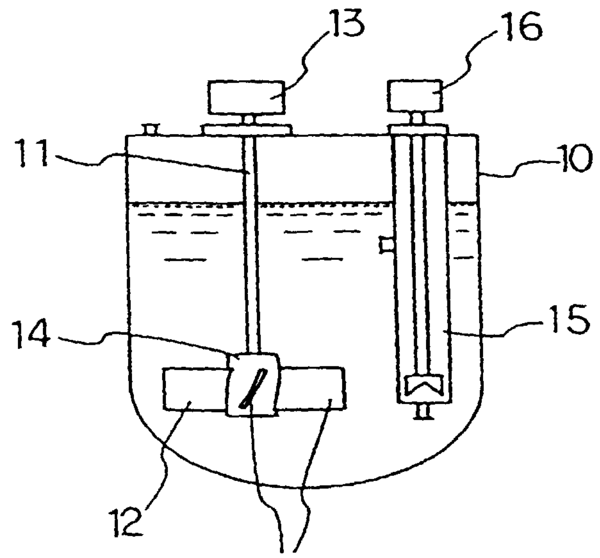

FIG. 3

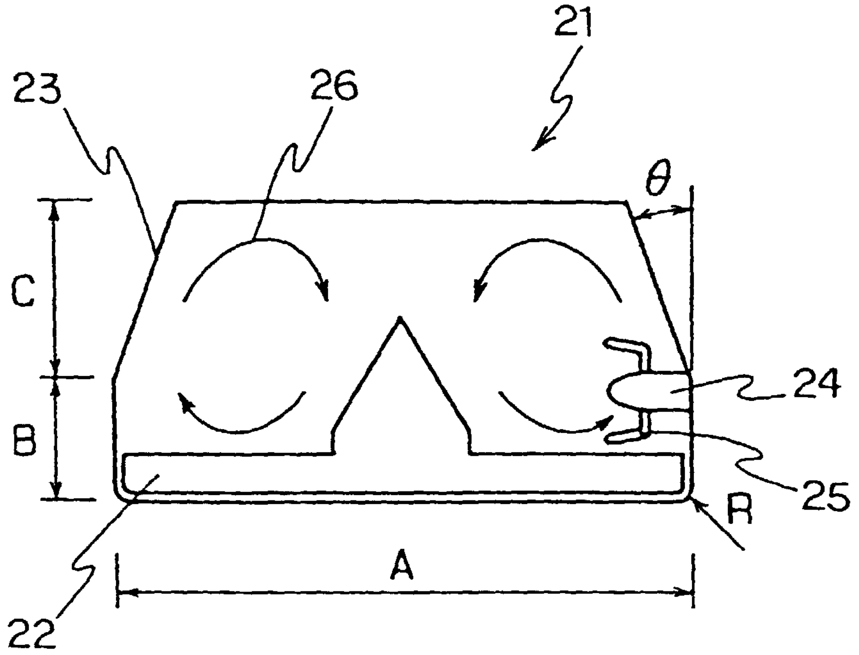


FIG. 4

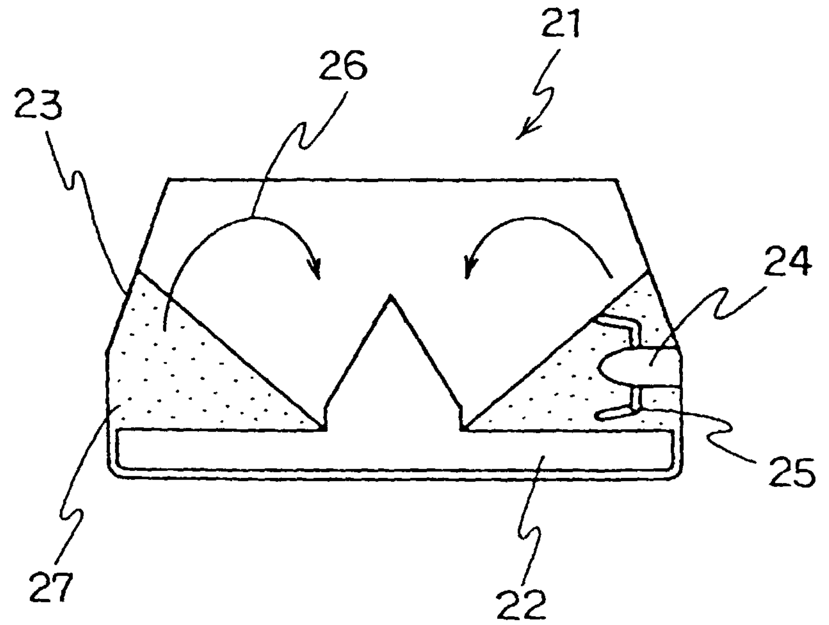

FIG. 5

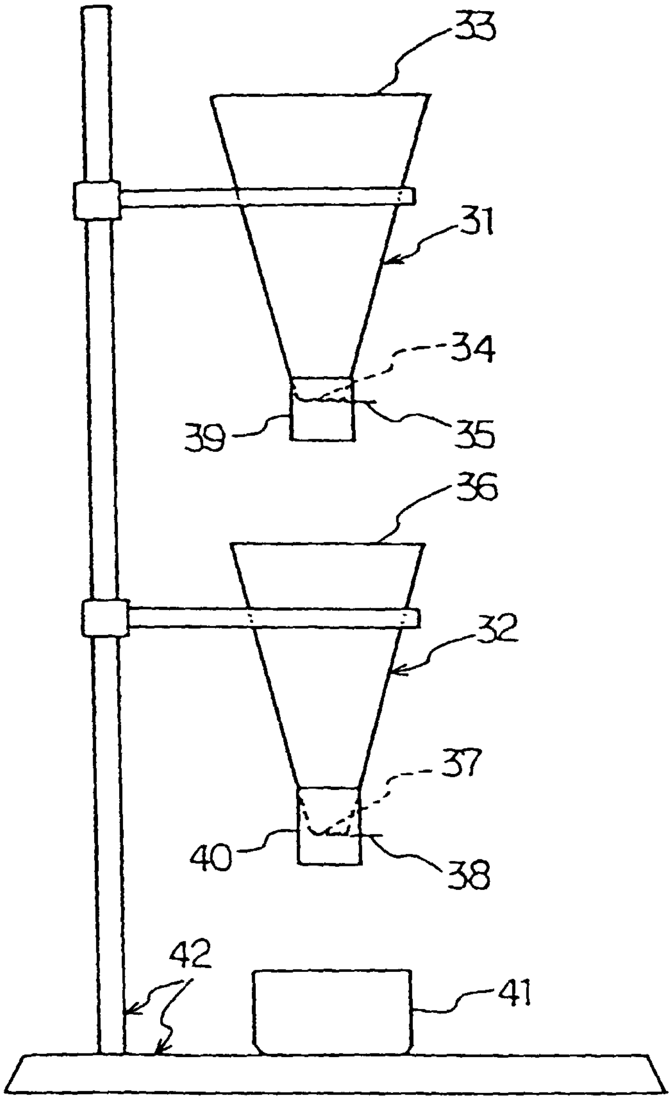

**INTERNATIONAL SEARCH REPORT**

International application No. PCT/JP98/03344

A. CLASSIFICATION OF SUBJECT MATTER
Int.Cl$^6$ C08J3/14, C08J3/16, C08L27/18

According to International Patent Classification (IPC) or to both national classification and IPC

B. FIELDS SEARCHED

Minimum documentation searched (classification system followed by classification symbols)
Int.Cl$^6$ C08J3/14, C08J3/16, C08L27/18

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 6-73189, A (Daikin Industries, Ltd.), 15 March, 1994 (15. 03. 94), Claims ; page 3, left column, line 26 (Family: none) | 1, 3, 5<br>6, 8, 10, 12, 13, 23 |
| Y | JP, 56-115326, A (Daikin Industries, Ltd.), 10 September, 1981 (10. 09. 81), Claims ; page 3, upper left column, lines 15 to 19 & GB, 2071112, B & DE, 3105789, A & US, 4440879, A | 6, 8, 10, 12, 13, 20, 22, 23 |
| X<br>Y | JP, 45-9071, B (Daikin Industries, Ltd.), 1 April, 1970 (01. 04. 70), Claims ; page 3, right column, lines 17, 18 (Family: none) | 1<br>20, 22, 23 |
| X | JP, 63-159438, A (Daikin Industries, Ltd.), 2 July, 1988 (02. 07. 88), Claims ; page 2, lower left column, line 20 to upper right column, line 1 (Family: none) | 1, 3 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 October, 1998 (14. 10. 98) | Date of mailing of the international search report<br>27 October, 1998 (27. 10. 98) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP98/03344

C (Continuation). DOCUMENTS CONSIDERED TO BE RELEVANT

| Category* | Citation of document, with indication, where appropriate, of the relevant passages | Relevant to claim No. |
|---|---|---|
| A | JP, 9-52955, A (Daikin Industries, Ltd.), 25 February, 1997 (25. 02. 97), Claims & WO, 97/07157, A & EP, 844271, A | 1-23 |
| A | JP, 4-218534, A (Daikin Industries, Ltd.), 10 August, 1992 (10. 08. 92), Claims & EP, 454043, B & US, 5321059, A & DE, 69126681, T2 | 1-23 |

Form PCT/ISA/210 (continuation of second sheet) (July 1992)